# EUROPEAN PATENT APPLICATION

(11) **EP 1 912 195 A1**
(43) Date of publication of application: **16.04.2008**
(21) Application number: 07380261.3
(22) Date of filing: 25.09.2007
(51) Int. Cl.: G09B 25/06, G03B 21/60

(54) **System of virtual simulation of spaces, sceneries and similar**

(30) Priority: 25.09.2006 ES 200602419; 21.03.2007 ES 200700742
(71) Applicant: Insca Internacional, S.L., 12540 Villarreal (Castellon) (ES)
(72) Inventor: Llorens Miravet, Salvador, 12540 Villareal (Castellón) (ES)
(74) Representative: Ungria Lopez, Javier

(57) **Abstract**

It consists of a system intended to achieve in a manner as real as possible the final result that is going to be obtained with a chosen decorative element.

It is characterised in that it comprises the combination of at least one screen (2) with structure and three-dimensional objects and a projector (1), which projects decorative images on that structure and three-dimensional objects (10).

Another characteristic is that some planes nearly perpendicular to the incidence of the ray of light from the projector (1) incorporate a rough structure, which improves the reflecting properties of those planes.

In this way, the projected elements and images are successfully given in relief bringing them as close as possible to a real scenery.

## Description

### OBJECT OF THE INVENTION

As stated in the title of this descriptive specification, the present invention relates to a system of virtual simulation of spaces, sceneries and similar which has as its essential end the aim of anticipating in a manner that is as real as possible the final result that the client is going to obtain with the chosen decorative element, especially via the projection at an approximately real scale with the final forms and the chosen materials or colours.

The invention thus concerns obtaining a high degree of reality by increasing the viewing of the planes on which at least one emitted ray of light by the projector falls on said planes.

It basically comprises a projector and a screen formed from the figures that will provide a relief for the forms projected on them.

### PRIOR ART OF THB INVENTION

Currently, within projection systems used for sceneries or displays in bathrooms, kitchens or similar, part of a standard scenery is resorted to, such as for example a corner or computer simulation in order to see the effect of the arrangement of the elements, materials and/or colours used.

In the case of floors and walls, panels with facings or pavings are also used so that the client can have an idea of what they want to lay. All these systems require the imagination of the final client in order to choose the decoration element sought, which, once installed, could be something different from what they were thinking of.

In terms of the solution of having a large variety of prototypes or small assemblies, it can be said that in these cases certain needs are required in terms of space, cost and time that make this non-viable.

### DESCRIPTION OF THE INVENTION

With the aim of achieving the objectives and avoiding the drawbacks mentioned in the above paragraphs, the invention proposes a system for the virtual simulation of spaces, sceneries and similar, said system consisting of a projector and a screen or background with the particular feature of having three-dimensional bodies or objects that will provide the reality sought for the figures projected from the projector.

The elements forming part of this screen or background will have the particular feature of adapting their form to the conical view with which we perceive them and with which they are designed or drawn in different programs, such as for example CAD programs, with the aim that the edges of the objects coincide as approximately as possible with what is projected.

Moreover, the figures used for the background or screen will be arranged in such a way that all the planes are visible from the projector, avoiding forms with planes hidden from the projector which would create shadows, since this would diminish the reality of the projected image.

The projector will project the required three-dimensional image and, moreover, the background or screen with the forms coinciding with what is going to be projected.

Another characteristic of the invention relates to the possibility of incorporating several different screens associated with a single projector so that, in this case, the several different screens are incorporated into a single rotating support with several lateral faces, each of which contains a different screen or background.

Another characteristic is that at least the planes most parallel to the ray of light include a particular rough surface which causes a greater degree of reflection of the projected light or image, thereby avoiding dark zones.

This rough surface is characterised in that it comprises a staggered structure causing the staggers to coincide with the pixeling of the reflected image.

Another characteristic of the invention is that the said rough surfaces can be covered by means of an essentially smooth and transparent cover. This therefore prevents the depositing of dust and/or dirt on the staggered structure in such a way that failure to incorporate the characteristic cover would cause distortion of the light giving rise to another kind of shadow or undesired effects that are to a greater or lesser degree distanced from the reality sought in the virtual simulation assembly.

Another characteristic of the invention is the incorporation of a matt coating for the entire surface which does not produce any brilliance and/or reflections, as could occur in planes which are indeed perpendicular to the rays of light from the projector.

Below, in order to facilitate a better understanding of this specification and forming an integral part thereof, some figures are attached in which, on an illustrative rather than limiting basis, the object of the invention has been represented.

### BRIEF DESCRIPTION OF THE DRAWINGS

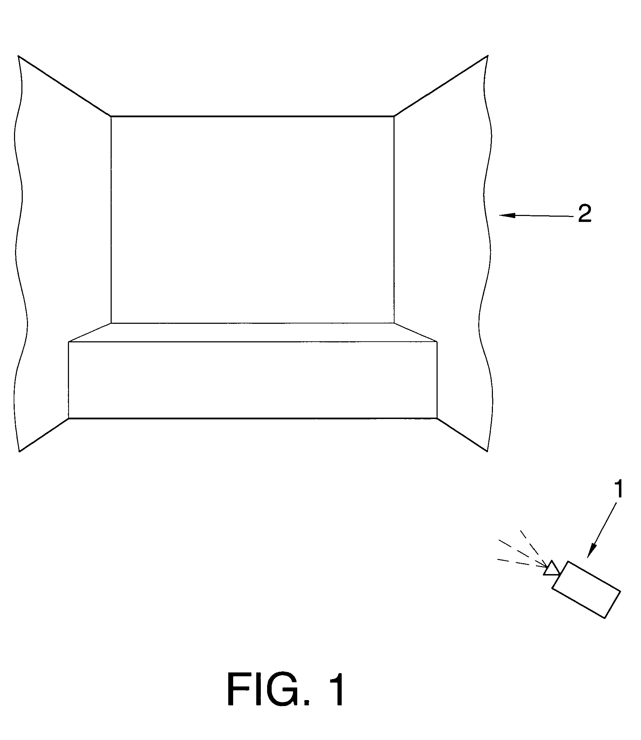

Figure 1.- Shows a schematic view of the elements forming the virtual simulation system for spaces, sceneries and similar, forming the object of the invention.

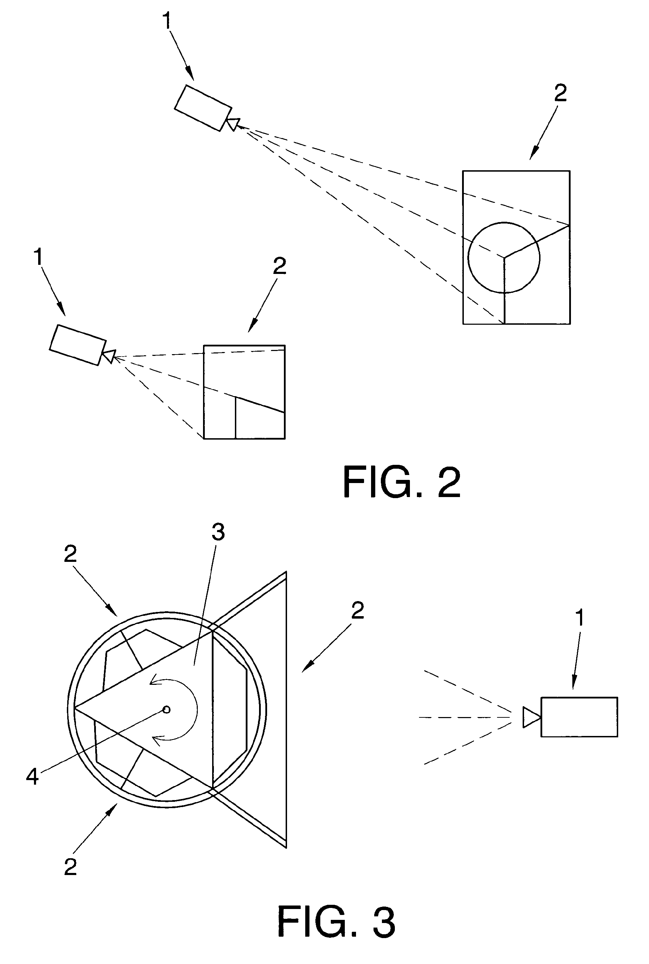

Figure 2.- Shows another schematic view representing a profile of assembly with the same elements as in the previous figure.

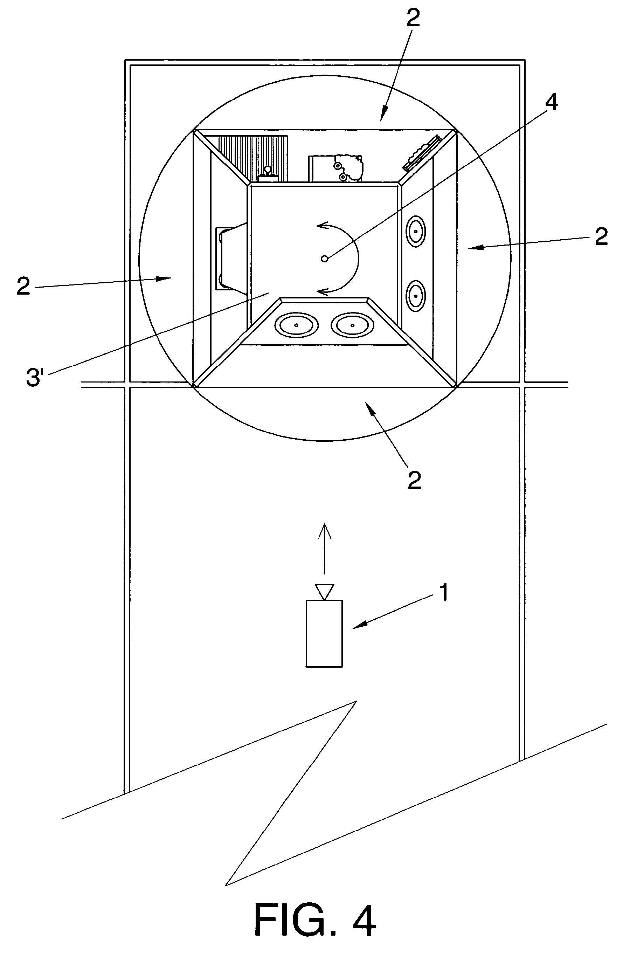

Figures 3 and 4.- Shows respective views in perspective where several backgrounds or screens are represented incorporated into a single rotating support with lateral faces, each one of which presents a different background. In this way, the image will be projected on the desired screen.
Figures 5 and 6.- Show some views of the projection of the virtual simulation system.

### DESCRIPTION OF THE PREFERRED FORM OF EMBODIMENT

Considering the numbering adopted in the figures, the invention comprises a system for the virtual simulation of spaces or sceneries comprising a projector 1 and a screen or white background 2 which has the particular feature of incorporating three-dimensional objects or figures which will provide the image with the reality that is sought. The elements forming part of this screen or background 2 will have the particular feature of adapting their form to the conical view with which we perceive them and with which they are designed or drawn with the CAD program, with the aim that the edges of the figures are better adapted to the edges of the projected elements.

Several different backgrounds will be provided in terms of the forms and elements that they comprise, joined together, along with a projector with several positions in such a way that with all the backgrounds the necessary conditions are met so that the figures coincide with the projected objects.

Another embodiment comprises a system for the virtual simulation of spaces or sceneries consisting of a projector 1 and a screen or white background 2 with the particular feature of having three-dimensional figures or objects that will provide the image with the reality that is sought.

The elements forming part of this screen or background 2 will have the particular feature of adapting their form to the conical view with which we perceive them and with which they are designed or drawn with the CAD program, with the aim that the edges of the figures are better adapted to the edges of the projected elements.

Several different backgrounds will be able to be had in terms of the forms, with the elements forming them being inserted into a prism 3, 3', by way of a support, in which each of the faces represents a background 2 which can be selected by rotating the prism around a centred axis 4. In this case, the projector is fixed in a suitable position for causing the projected elements to coincide with the figures of the selected background.

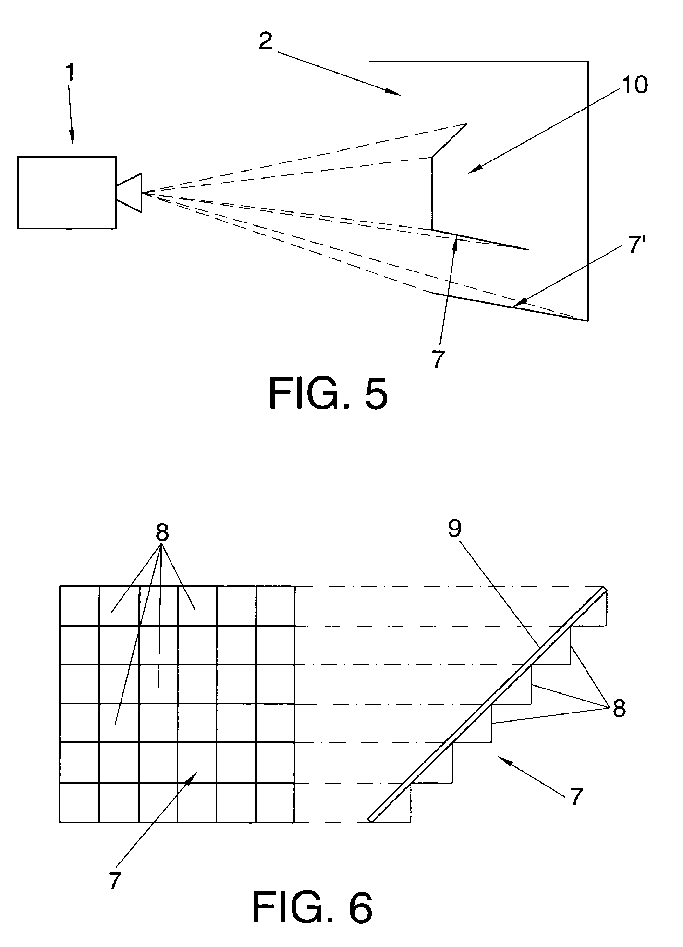

On the other hand, as shown in figures 5 and 6, the planes 7, 7' that are least perpendicular to the three-dimensional object 10 and/or background 2 to the incidence of the ray of light will have a characteristic roughness that improves the reflecting properties of the light.

The roughness will correspond to a staggering (8), in such a way that the size and location of the projected pixels are made to coincide with those staggers (8).

It can also be pointed out that the transition of one staggered element to another will be able to adopt different angles with the surface being able to be made very rough or practically smooth. In turn, the planes 7, 7' containing that roughness will be able to include a smooth transparent cover 9.

Finally, it can be stated that the surfaces of the three-dimensional objects and screen will be able to include a matt coating which prevents reflections, especially in the zones perpendicular to the incidence ray from the projector.

## Claims

1. System of virtual simulation of spaces, sceneries and similar, which, being intended to achieve as real as possible the final result that is going to be obtained with a chosen element of decoration, is **characterised in that** it comprises the combination of at least one screen (2) with structure and three-dimensional objects (10) and a projector (1) which projects decorative images on that three-dimensional objects and structure; all this in order to give relief to the projected elements and images bringing them as close as possible to a real decoration in its true dimension.

2. System of virtual simulation of spaces, sceneries and similar, according to the above claim, **characterised in that** at least the three-dimensional objects are adapted to the configuration of projected conical representation which is used with some software applications, essentially CAD programs, for the representation of space in three dimensions.

3. System of virtual simulation of spaces, sceneries and similar, according to the above claim, **characterised in that** at least some edges of the structure and three-dimensional objects of the screen (2) coincide with the edges of the projected images or elements.

4. System of virtual simulation of spaces, sceneries and similar, according to any of the above claims, **characterised in that** the light from the projector directly falls on the planes of the visible structure of the screen and three-dimensional objects without forming shadows, thus avoiding hidden planes.

5. System of virtual simulation of spaces, sceneries and similar, according to any of the above claims, **characterised in that** it includes several different screens and at least one projector with as many fixed positions as screens on which to project the corresponding image.

6. System of virtual simulation of spaces, sceneries and similar, according to claim 5, **characterised in that** the various screens are located in a common support.

7. System of virtual simulation of spaces, sceneries and similar, according to any of claims 1 to 4, **characterised in that** it includes several different screens supported on a common rotating support (3, 3') in order to be able to locate one of those screens with the desired orientation in accordance with a projector.

8. System of virtual simulation of spaces, sceneries and similar, according to claim 7, **characterised in that** the projector (1) associated with the rotating support (3, 3') has a fixed position.

9. System of virtual simulation of spaces, sceneries and similar, according to any of the above claims, **characterised in that** at least the planes (7, 7') nearly perpendicular to the incidence of the ray of light from the projector (1) incorporate in said planes a rough structure that improves the reflecting properties of those planes (7, 7').

10. System of virtual simulation of spaces, sceneries and similar, according to claim 9, **characterised in that** the rough structure comprises a staggered surface formed from staggered elements (8).

11. System of virtual simulation of spaces, sceneries and similar, according to claim 10, **characterised in that** the projection of the light is by means of pixels which coincide in size and projected direction with at least part of the staggered elements (8).

12. System of virtual simulation of spaces, sceneries and similar, according to either of claims 11 or 12, **characterised in that** the transition of a staggered element (8) with respect to another will be able to adopt different angles, thereby being able to vary the degree of roughness with a wide range from a very rough surface to a practically smooth surface.

13. System of virtual simulation of spaces, sceneries and similar, according to any of claims 10 to 12, **characterised in that** the planes or faces containing rough surfaces incorporate a transparent cover (9).

14. System of virtual simulation of spaces, sceneries and similar, according to claim 13, **characterised in that** the transparent cover has a smooth surface.

15. System of virtual simulation of spaces, sceneries and similar, according to any of the above claims, **characterised in that** at least some surfaces of the three-dimensional object (10) and screen (2) have a matt coating which avoid reflections, essentially zones perpendicular to the incident ray of the projector (1).
